# EUROPEAN PATENT APPLICATION

(11) **EP 2 452 565 A1**
(43) Date of publication of application: **16.05.2012**
(21) Application number: 11167777.9
(22) Date of filing: 26.05.2011
(51) Int. Cl.: A23B 7/153, C01B 11/02, A23L 3/3454

(54) **Process for the treatment of fruit and vegetable products**

(30) Priority: 12.11.2010 IT MO20100325
(71) Applicant: Centro Servizi e Tecnologie Ambientali S.r.l., 45030 Salara (RO) (IT)
(72) Inventor: Debbi, Adriano, 45030 Salara (RO) (IT); Tirelli, Gianfranco, 45030 Salara (RO) (IT)
(74) Representative: Brunacci, Marco

(57) **Abstract**

The process for the treatment of fruit and vegetable products (3) comprises the phases of :
- producing a solution (8) of chlorine dioxide dissolved in water;
- producing demineralised water (10);
- mixing the solution (8) and demineralised water (10) to obtain washing water (11);
- washing fruit and vegetable products (3) with washing water (11).

## Description

The present invention relates to a process for the treatment of fruit and vegetable products.

It is well known that in the field of picking and distribution of fruit and vegetable products, in particular pomaceous or drupaceous fruits but not only, the need is felt to sanitize and treat the picked products in order to reach a status of edibility compliant to standards and with a quality degree higher than the standard value and, at the same time, ensuring the preservation of such degree of quality the longest as possible to allow the products, once picked and sanitized, to arrive on the market in the same conditions.

In such respect it is underlined that the picked products can have residues of different nature (atmospheric dust, vegetal residues, mineral salts and microresidues of organic origin, chemical residues from treatments with plant protection products), imperfections or damages due to the harvesting, post-harvesting and processing phases (bruises, surface scratches, damages due to atmospheric agents or animals, crushed fruits) and anomalies due to plant diseases.

These anomalies are responsible far the post-harvesting infection and decomposition phenomena.

At present, fruit and vegetable products such as pomaceous or drupaceous fruits are treated, before being put on the market, in special packaging lines which consist of a sequence of processing stations to carry out operations such as precalibration, water brushing and/or dry brushing.

Such packaging lines usually have at least a washing tank, where fruit and vegetable products are dipped in water, and a final washing ramp, through which products arrive at a selection and sorting table and end at a palletising and stocking station.

Before being arranged in crates, bags or other containers, furthermore, according to the market needs, pomaceous or drupaceous fruits may undergo a waxing treatment through a thin protective layer which increases their brightness.

The traditional treatment of fruit and vegetable products is not free from drawbacks in particular linked to the low cleaning and sanitizing capacity of the water used during the process, which therefore is not able to ensure the complete removal of the polluting substances from the surface of fruits before going on with the packaging and/or waxing operations.

The waxing operation, moreover, while giving fruits a clear aesthetic appeal, has however the drawback of encapsulating chemical substances (fine dust and resides from treatments with plant protection products) on their surface, microbiological and fungal substances (bacteria, viruses, fungi, leavens, moulds and spores) which can subsequently enter the inside of the fruit permanently and then give rise to surface and/or in-depth deteriorations with possible organic decomposition effects and very important anti-aesthetic effects.

The cases of product loss or waste during the preservation period before their putting on the market are therefore frequent and cause many difficulties and problems for their distribution and trading.

The main aim of the present invention is to provide a process for the treatment of fruit and vegetable products which allows to increase the cleaning and sanitizing power of water used in packaging lines.

Such process keeps unaltered the characteristics of water drinkableness and quality and organoleptic properties of products, in full compliance with the laws in force in the food sector.

A further object of the present invention is to provide a process for the treatment of fruit and vegetable products which allows to reduce the losses during the preservation and trading phases, as well as the problems linked to their preservation, thus having an eye to distribution and final sales.

All this greatly increases preservation times, also of the slightly defective goods. Not the last object of the present invention is to guarantee a high degree of quality, also aesthetic, in particular of brightness with respect to what can be obtained by waxing.

Another object of the present invention is to provide a process for the treatment of fruit and vegetable products suitable for overcoming the mentioned drawbacks of the state of the art through a simple, rational, easy and effective to use as well as low cost solution.

The above objects are achieved by the present process for the treatment of fruits and vegetable products, characterised by the fact that it comprises the phases of:
- producing a solution of chlorine dioxide dissolved in water;
- producing demineralised water;
- mixing said solution and said demineralised water to obtain washing water;
- washing fruit and vegetable products with said washing water.

Other characteristics and advantages of the present invention will become more evident from the description of a preferred, but not sole, embodiment of a process for the treatment of fruit and vegetable products, illustrated purely as an example but not limited to the annexed drawings in which:
figure 1 is an axonometric view of the plant for the implementation of the process according to the invention;
figure 2 is an operating diagram of the plant of figure 1;

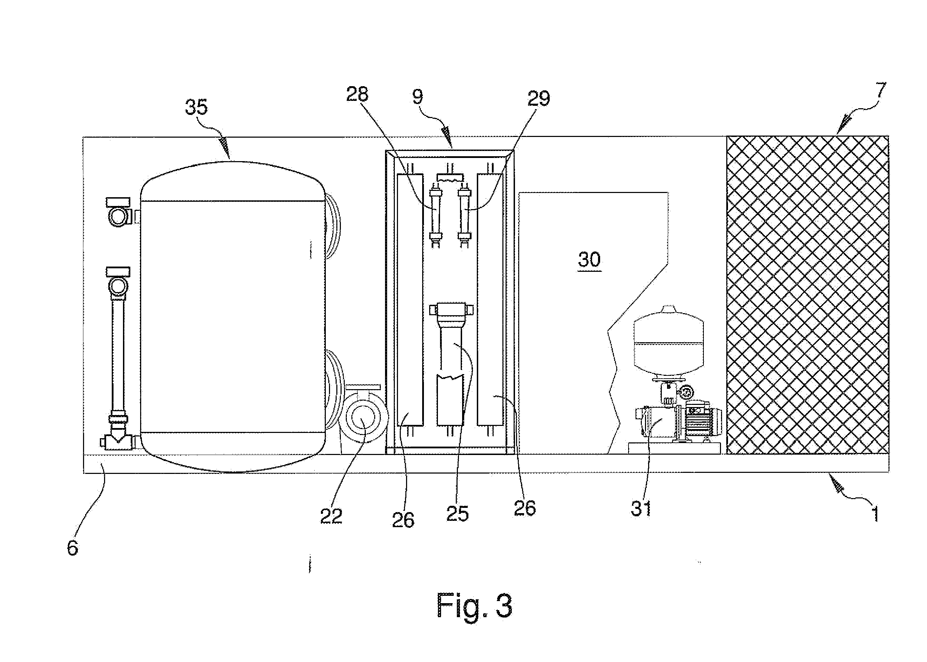

figure 3 is a front view of the machine in the plant of figure 1;

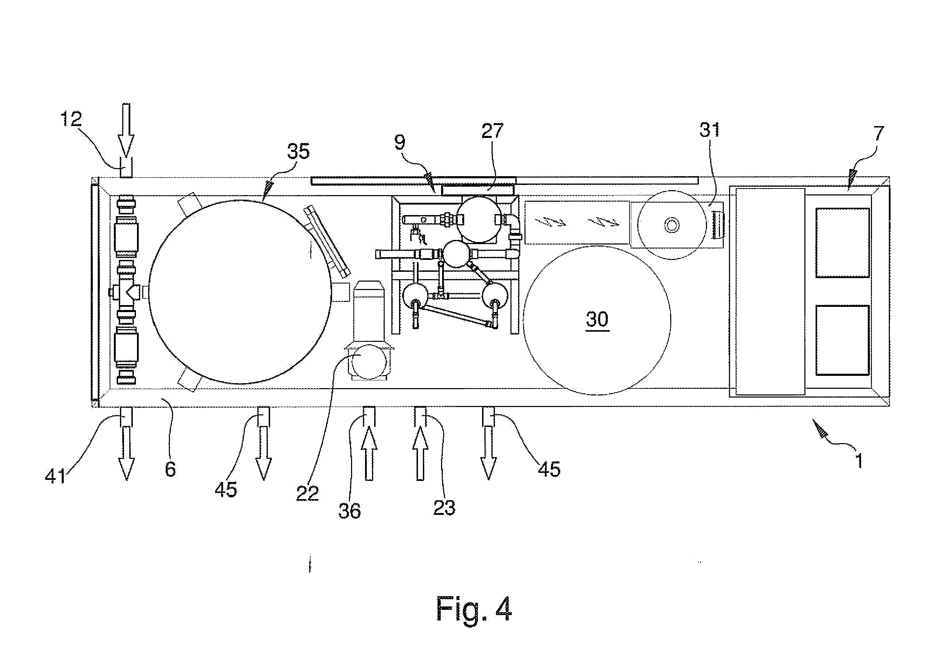

figure 4 is a plan view of the machine of figure 3.

With particular reference to such figures, a plant for the implementation of the process for the treatment of fruit and vegetable products is globally indicated by 1,2.

Such plant comprises a machine 1 for the treatment of fruits and vegetable products 3 which is prepared in proximity of a packaging line 2 of fruit and vegetable products 3.

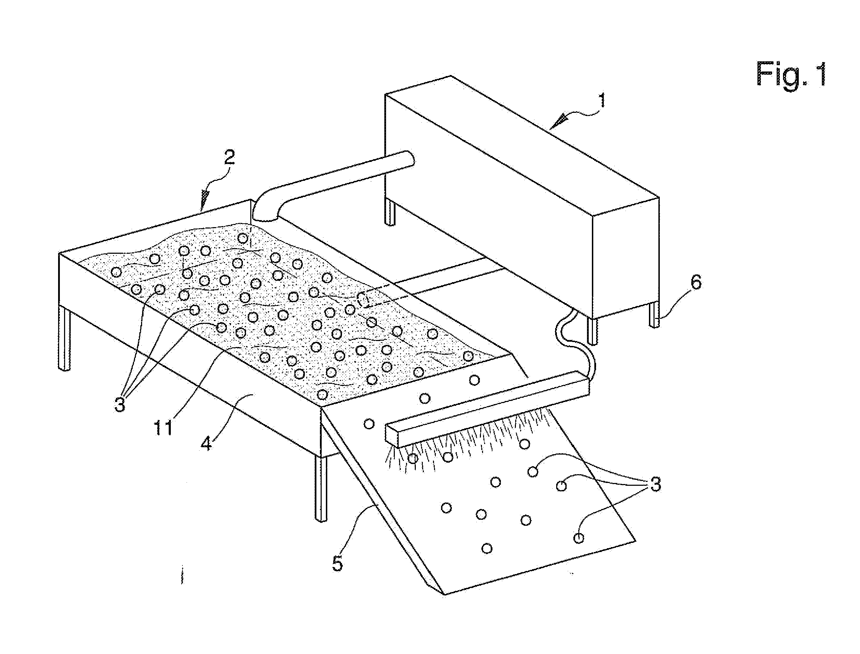

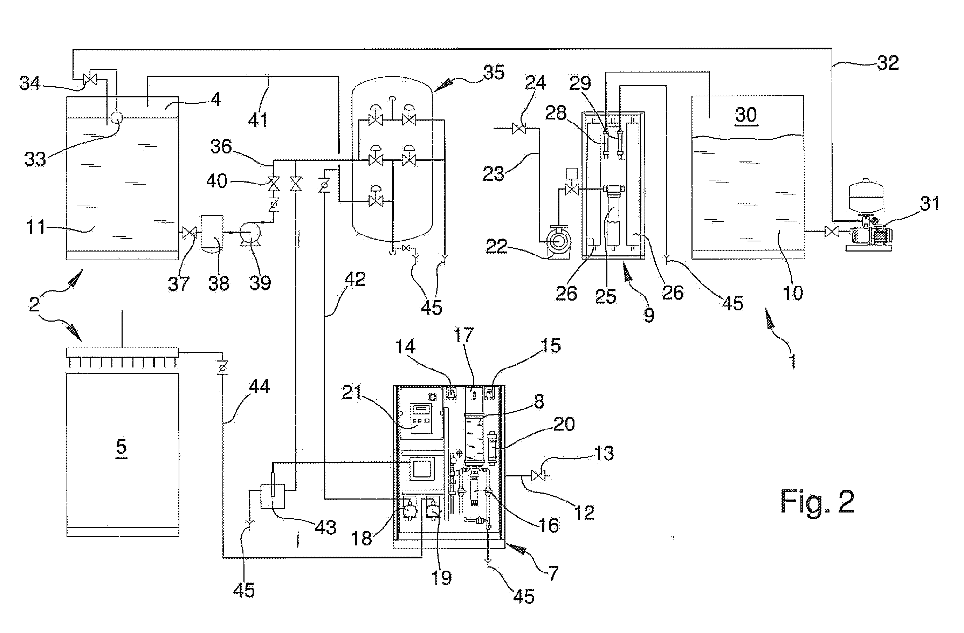

The packaging line 2 is schematically and partially illustrated in figures 1 and 2 and has a washing tank 4, in which the fruit and vegetable products 3 are designed to transit to be washed, and a final washing ramp 5, in which the fruit and vegetable products 3 can be rinsed before reaching a selection and sorting station and a palletising and stocking station, not shown.

With respect to the direction of normal forward movement of the fruits and vegetable products 3 along the packaging line 2 the final washing ramp 5 is arranged downstream the washing tank 4.

The machine 1 comprises a base frame 6, of a skid type or the like, on which are mounted a preparation and dosing unit 7, to prepare and dose a solution 8 of chlorine dioxide dissolved in water and a demineralisation unit 9 for the production of demineralised water 10.

The solution 8 and the demineralised water 10 are intended to be mixed in the washing tank 4 to obtain washing water 11 with top washing and sanitizing properties.

The preparation and dosing unit 7 is connectable to the standard water mains through a first connection pipe 12 on which a pressure supply and limiting valve 13 is mounted.

Inside the preparation and dosing unit 7 are fitted a first dosing pump 14, which suctions hydrochloric acid in water solution from a first tank not shown, and a second dosing pump 15, which suctions sodium chlorite in water solution from a second tank, not shown either.

By way of example, hydrochloric acid is dissolved in water solution with a concentration of 8.5%, while sodium chlorite is dissolved in water solution with a concentration of 7.5%.

Such concentrations of hydrochloric acid and sodium chlorite are intended to be sent from the dosing pumps 14, 15 to a reactor 16 where they can react together and form chlorine dioxide in a gaseous form, which is dissolved in the water coming from the first connection pipe 12 inside a collection reservoir 17 of the solution 8.

Preferably, the solution 8 has a concentration of chlorine dioxide rather high and equal to 19.43 g/l.

Inside the preparation and dosing unit 7 are also arranged a first delivery pump 18, for sending the solution 8 to the washing tank 4, and a second delivery pump 19, for sending the solution 8 to the final washing ramp 5.

The preparation and dosing unit 7 also has an active carbon filter 20 for gas vent and a first control panel 21 with PLC.

The demineralisation unit 9 is of the reverse osmosis type and demineralised water is precisely osmotized water.

The demineralisation unit 9 comprises a supply pump 22 that sucks water from normal water mains through a second connection pipe 23 on which a stop valve 24 is fitted.

Pressurized water coming from the supply pump 22 is sent to a cartridge micro filter 25 and then to two or more osmotic membranes 26.

The demineralisation unit 9 also comprises a second control panel 27 with PLC, a first flow meter 28 for controlling the flow of demineralised water 10 produced by osmotic membranes 26 and a second flow meter 29 for controlling the flow of concentrated water (osmosis waste) to discharge.

The demineralised water 10 exiting the osmotic membranes 26 is collected in an accumulation reservoir 30, which is mounted on the base frame 6 and which is connected to a surge tank pump 31 for feeding the washing tank 4 through a supply pipe 32.

The accumulation reservoir 30 has a level control system, suited to start or stop the demineralisation unit 9 with the aim of always having a sufficient quantity of demineralised water 10 available inside the accumulation reservoir 30.

The surge tank pump 31, on the other hand, is started by a floater 33 arranged inside the washing tank 4 and which, depending on the level, controls a regulation valve 34 arranged along the supply pipe 32.

Depending on the control job, the pressure inside the supply pipe 32 changes and such variations are read by a pressure switch with which the surge tank pump 31 is equipped, thus controlling its switching on and off for sending the demineralised Water 10 when the level of the washing tank 4 so requires.

On the base frame 6 is also fitted a filtering unit 35 for filtering the washing water 11.

The washing tank 4 is connected to the filtering unit 35 through a first connection tube 36 on which are mounted, in sequence, a first on-off valve 37, a rough filter 38, a suction pump 39, and a second on-off valve 40.

Usefully, the filtering unit 35 is a quartz sand filter with cross for the 5-valve filtration/washing phases.

The washing water 11 exiting the filtering unit 35 returns to the washing tank 4 along a second connection tube 41.

The filtering unit 35 is operatively connected to the preparation and dosing unit 7.

In this regard, it is underlined that the first delivery pump 18, designed to send the solution 8 to the washing tank 4, is connected to a first delivery line 42 which engages with the second connection tube 41_{:}

In order to control the dosing of chlorine dioxide in washing water 11, furthermore, the machine 1 has a Rx meter 43 mounted on the skid 6, which is fluidically connected to the first connection tube 36 immediately downstream the second on-off valve 40 for collecting a sample of washing water 11 coming from the washing tank 4 and is electronically connected to the preparation and dosing unit 7 to communicate to the unit itself the data read on the sample collected.

The Rx meter 43, in actual facts, is an instrument which allows to monitor the contents of chlorine dioxide in washing water 11 and to provide a feed-back on the treatment efficiency to the preparation and dosing unit 7.

The same Rx meter 43 is able to control the operation of the second delivery pump 19, which is connected to a second delivery line 44 for sending the solution 8 to the final washing ramp 5.

The machine 1 is connected to a discharge 45 for the collection of washing water of the filtering unit 35, washing water of the preparation and dosing unit 7, concentrated water discharged by the osmotic membranes 26 and the sample monitored by the Rx meter 43.

The process for the treatment of fruit and vegetable products 3 according to the invention comprises the phases of:
- producing the solution 8 of chlorine dioxide dissolved in water. Through the machine 1 such phase is performed by the preparation and dosing unit 7, which allows hydrochloric acid and sodium chlorite react in the reactor 16 to form chlorine dioxide in gaseous form, and which therefore dissolves chlorine dioxide in water to obtain the solution 8;
- producing demineralised water 10. Through the machine 1, such phase occurs by reverse osmosis inside the demineralisation unit 9 and comprises stocking demineralised water 10 in the accumulation reservoir 30;
- mixing the solution 8 and demineralised water 10 to obtain washing water 11;
- washing fruit and vegetable products 3 with washing water 11. Such phase takes place in the washing tank 4;
- periodically filtering the washing water 11 in the washing tank 4. Through the machine 1, such phase occurs by means of the filtering unit 35, and comprises taking the washing water 11 from the washing tank 4, making the washing water 11 pass through the filtering unit 35, and bringing the filtered washing water 11 back to the washing tank 4;
- monitoring the contents of chlorine dioxide in the washing tank 4. Through the machine 1, such phase occurs by means of the Rx meter and comprises taking a sample of the washing water 11 from the washing tank 4, in particular from the first connection tube 36, and send it to the Rx meter;
- reintegrating the solution 8 and demineralised water 10 in the washing tank 4 to keep the saltiness of the washing water 11. Such phase of the process is obtained by the machine 1 in an automated way which, depending on the data read by the Rx meter, enables or disables the first delivery pump 18 to increase or decrease the flow of solution 8 sent through the first delivery line 42. In the same way, the pressure switch of the surge tank pump 31 controls the sampling of demineralised water 10 from the accumulation reservoir 30 when in the washing tank 4 the floater 33 so requires. The fact that saltiness is kept within the preset values inside the washing tank 4 ensures the maximum possible performance of the sanitization reactions of fruit and vegetable products 3 with chlorine dioxide;
- rinsing the fruit and vegetable products 3 with rinsing water on the final washing ramp 5. Such phase possibly comprises adding the rinsing water with the solution 8 sent from the second delivery pump 19;
- calculating the time of putting the fruit and vegetable products 3 on the market, i.e. the time elapsing from when the fruit and vegetable products exit the packaging line 2 to the moment when these are put on the market, and leaving on the fruit and vegetable products 3 a quantity of chlorine dioxide that it fades away when the above mentioned time of putting on the market has elapsed. In other words, at the end of the process, a certain concentration of chlorine dioxide remains on the fruit and vegetable products 3 which is suitable for preventing any subsequent pollutions. After washing, the chlorine dioxide which has remained on the surface of the fruit and vegetable products 3 begins to fade away naturally with a speed which can be easily determined depending on the type of fruit. The final phase of such process, therefore, consists in evaluating how long the fruit and vegetable products 3 will be stocked in refrigerating cells or not, once washing is completed, and how long it will take to distribute them in the sorting centres and stores/markets. Starting from this calculation and combining it with the forecast of the dissolving rapidity of chlorine dioxide, then it is possible to calculate how much chlorine dioxide has to be left on the fruit and vegetable products 3. In this respect it is easy to understand how the quantity of solution 8 produced and the exposure time of the fruit and vegetable products 3 to the solution 8 inside the washing tank 4, and eventually on the final washing ramp 5, are evaluated depending on the time of putting on the market;
- the process mentioned above can of course be obtained with methods and technologies different than those provided by the machine 1, but in the case of employing such machine, the process according to the invention also comprises a preliminary phase which consists in arranging the machine 1 in proximity of the packaging line 2 (in particular of its washing tank 4), or in proximity of two or more packaging lines 2 so as to supply several washing tanks 4 at the same time.

It has in point of fact been ascertained how the described invention achieves the proposed objects.

In such respect the fact is underlined that the fruit treated with the special process according to the invention is clearly glossy and shiny, with tendency to a rapid spray of water on the surface and a cleaning suitable for significantly improving the sanitizing action of chlorine dioxide, thus increasing strongly its effectiveness and giving the same the characteristics of a product belonging to the "fourth range" (ready-to-be-consumed fruit and vegetable product).

It is underlined, moreover, that fruit, contrary to what happens with the waxing systems, is in a condition of natural breathing, keeping its qualities unaltered for a long time.

## Claims

1. Process for the treatment of fruit and vegetable products (3), **characterized by** the fact that it comprises the phases of :
- producing a solution (8) of chlorine dioxide dissolved in water;
- producing demineralised water (10);
- mixing said solution (8) and said demineralised water (10) to obtain washing water (11);
- washing fruit and vegetable products (3) with said washing water (11).

2. Process according to the claim 1, **characterized by** the fact that said washing occurs in a washing tank (4) containing said washing water (11).

3. Process according to one or more of the preceding claims, **characterized by** the fact that it comprises filtering periodically said washing water (11) in said washing tank (4).

4. Process according to one or more of the preceding claims, **characterized by** the fact that said filtering comprises taking said washing water (11) from said washing tank (4), making said washing water (11) pass through a filtering unit (35), and bringing said filtered washing water (11) back to said washing tank (4).

5. Process according to one or more of the preceding claims, **characterized by** the fact that it comprises monitoring the contents of said chlorine dioxide in said washing tank (4).

6. Process according to the claim 5, **characterized by** the fact that said monitoring comprises taking a sample of said washing water (11) from said washing tank (4) and send it to a Rx meter (43).

7. Process according to one or more of the preceding claims, **characterized by** the fact that it comprises reintegrating said solution (8) and said demineralised water (10) in said washing tank (4) to keep the saltiness of said washing water (11).

8. Process according to one or more of the preceding claims, **characterized by** the fact that it comprises rinsing said fruit and vegetable products (3) with rinsing water.

9. Process according to one or more of the preceding claims, **characterized by** the fact that said rinsing takes place on a final washing ramp (5) of said fruit and vegetable products (3).

10. Process according to one or more of the preceding claims, **characterized by** the fact that it comprises adding said rinsing water with said solution (8).

11. Process according to one or more of the preceding claims, **characterized by** the fact that it comprises calculating the time of putting said fruit and vegetable products (3) on the market and leaving on said fruit and vegetable products (3) a quantity of said chlorine dioxide suitable for fading away substantially when said time of putting on the market has elapsed.

12. Process according to one or more of the preceding claims, **characterized by** the fact that the exposure time of said fruit and vegetable products (3) to said solution (8) and the quantity of said produced solution (8) depend on said time of putting on the market.

13. Process according to one or more of the preceding claims, **characterized by** the fact that said demineralised water (10) is osmotized water.

14. Process according to one or more of the preceding claims, **characterized by** the fact that said producing demineralised water (10) occurs by reverse osmosis.

15. Process according to one or more of the preceding claims, **characterized by** the fact that said producing demineralised water (10) comprises stocking said demineralised water (10) sin an accumulation reservoir (30).

16. Process according to one or more of the preceding claims, **characterized by** the fact that said producing the solution (8) comprises making hydrochloric acid and sodium chlorite react together.

17. Process according to one or more of the preceding claims, **characterized by** the fact that it comprises preparing a machine (1) for the treatment of said fruit and vegetable products (3) in proximity of at least a packaging line (2) of said fruit and vegetable products (3) having said washing tank (4), said machine (1) comprising:
- at least a base frame (6);
- at least a preparation and dosing unit (7) of said solution (8) mounted on said base frame (6);
- at least a demineralisation unit (9) for the production of said demineralised water (10) mounted on said base frame (6).

18. Process according to one or more of the preceding claims, **characterized by** the fact that at least one between said filtering unit (35), said accumulation reservoir (30) and said Rx meter (43) is mounted on said base frame (6).
